# EUROPEAN PATENT APPLICATION

(11) **EP 4 610 208 A1**
(43) Date of publication of application: **03.09.2025**
(21) Application number: 25160589.5
(22) Date of filing: 27.02.2025
(51) Int. Cl.: B65H 29/52, B65H 29/70, B65H 31/02, B65H 31/26, B65H 29/14

(54) **CONVEYANCE APPARATUS, CORRESPONDING IMAGE SCANNING APPARATUS, AND CORRESPONDING IMAGE FORMING APPARATUS**

(30) Priority: 29.02.2024 JP 2024029733
(71) Applicant: KYOCERA Document Solutions Inc., Osaka-shi, Osaka, 540-8585 (JP)
(72) Inventor: TRAN, Anh Viet, Osaka-shi, Osaka,, 540-8585 (JP)
(74) Representative: Viering, Jentschura & Partner mbB Patent- und Rechtsanwälte

(57) **Abstract**

A conveyance apparatus (100) includes a sheet conveyance path (1), a delivery port (7), and a delivery upper surface portion (4). A sheet S is conveyed on the sheet conveyance path (1). The sheet S conveyed on the sheet conveyance path (1) is delivered to the delivery port (7). The delivery upper surface portion (4) is continuous with an upper surface of the sheet conveyance path (1) and constitutes an upper surface of the delivery port (7). The delivery upper surface portion (4) includes an upstream upper surface portion (5) and a downstream upper surface portion (6). The upstream upper surface portion (5) is located on an upstream side in a direction in which the sheet S is conveyed. The downstream upper surface portion (6) is located on a downstream side in the direction in which the sheet S is conveyed. The downstream upper surface portion (6) is located in a lower position than the upstream upper surface portion (5).

## Description

### Field

The present disclosure relates to a conveyance apparatus, an image scanning apparatus, and an image forming apparatus.

### Background

A conveyance apparatus conveys and delivers sheets to a delivery port. The sheets delivered to the delivery port are stacked on the delivery port as conveyed sheets.

A conveyance apparatus described in Japanese Patent Application Laid-open No. 2014-76897 suppresses a curl that is a warp of a sheet. Suppressing the warp of the sheet prevents the interference between the sheet to be delivered and the conveyed sheet(s) on the delivery port. When the interference is prevented, problems with stockability, such as the sheet to be delivered pushing out the conveyed sheet, are suppressed. In addition to the problems with stockability, problems with the order of the conveyed sheets are also suppressed.

### Summary

In accordance with a first aspect of the present disclosure, a conveyance apparatus includes a sheet conveyance path, a delivery port, and a delivery upper surface portion. A sheet is conveyed on the sheet conveyance path. The sheet conveyed on the sheet conveyance path is delivered to the delivery port. The delivery upper surface portion is continuous with an upper surface of the sheet conveyance path and constitutes an upper surface of the delivery port. The delivery upper surface portion includes an upstream upper surface portion and a downstream upper surface portion. The upstream upper surface portion is located on an upstream side in a direction in which the sheet is conveyed. The downstream upper surface portion is located on a downstream side in the direction in which the sheet is conveyed. The downstream upper surface portion is located in a lower position than the upstream upper surface portion.

In accordance with a second aspect of the present disclosure, an image scanning apparatus includes a conveyance apparatus and an image scanning part. The conveyance apparatus is described in the first aspect. The image scanning part scans an image on the sheet conveyed by the conveyance apparatus.

In accordance with a third aspect of the present disclosure, an image forming apparatus includes an image scanning apparatus and an image forming part. The image scanning apparatus is described in the second aspect. The image forming part forms an image on a recording medium.

These and other objects, features and advantages of the present disclosure will become more apparent in light of the following detailed description of best mode embodiments thereof, as illustrated in the accompanying drawings.

### Brief Description of Figures

Fig. 1 is a vertical cross-sectional view of a conveyance apparatus according to this embodiment;
Fig. 2 is a side view of a sheet guiding frame that the conveyance apparatus has;
Fig. 3 is an upper perspective view of the sheet guiding frame;
Fig. 4 is a perspective view of a lower part of the sheet guiding frame;
Fig. 5 is a lateral cross-sectional view of the conveyance apparatus;
Fig. 6 is an enlarged vertical cross-sectional view of a sheet conveyance path in vicinity of a delivery port; and
Fig. 7 is an upper cutout side view of an image scanning apparatus and an image forming apparatus including the conveyance apparatus.

### Detailed Description

Hereinafter, an embodiment of the present disclosure will be described with reference to the drawings. Note that in the figures, the same or corresponding portions will be denoted by the same reference signs and the descriptions will not be repeated. Moreover, in the following description, even if terms, "left," "right," "front," and "back," meaning specific positions and directions are used, these terms are used for the sake of convenience in order to make the contents of the embodiments easily understood, and they are not related to directions when it is actually carried out.

### <Embodiment>

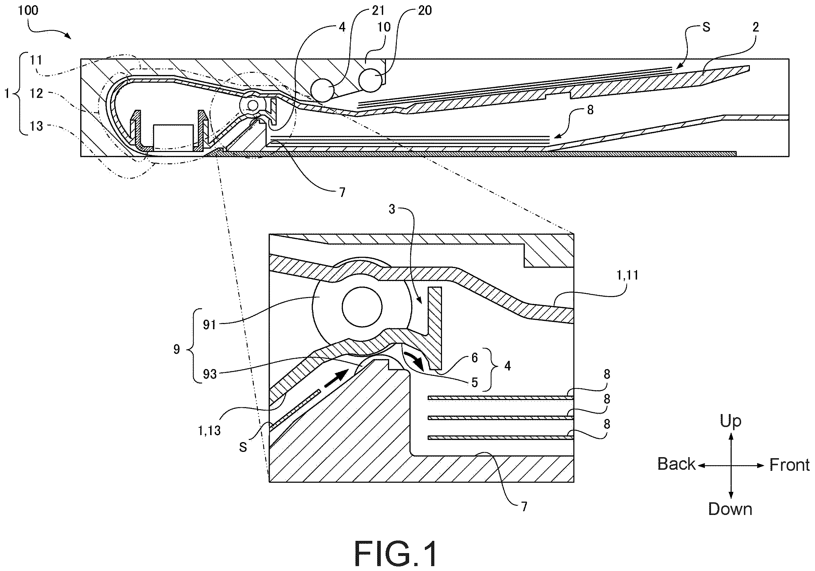

A conveyance apparatus 100 according to this embodiment will be described with reference to Fig. 1. Fig. 1 is a vertical cross-sectional view of the conveyance apparatus 100 according to this embodiment.

As shown in Fig. 1, the conveyance apparatus 100 includes a sheet conveyance path 1, a delivery port 7, and a delivery upper surface portion 4. A sheet S is conveyed on the sheet conveyance path 1. The sheet S conveyed on the sheet conveyance path 1 is delivered to the delivery port 7. The delivery upper surface portion 4 is continuous with an upper surface of the sheet conveyance path 1 and constitutes an upper surface of the delivery port 7. In Fig. 1, it is assumed that a direction to the delivery port 7 from the sheet conveyance path 1 that faces the delivery port 7 is a front direction and a direction opposite to the front direction is a back direction.

The delivery upper surface portion 4 includes an upstream upper surface portion 5 and a downstream upper surface portion 6. The upstream upper surface portion 5 is located on an upstream side in a direction in which the sheet S is conveyed. The downstream upper surface portion 6 is located on a downstream side in the direction in which the sheet S is conveyed. The downstream upper surface portion 6 is located in a lower position than the upstream upper surface portion 5.

The sheet S is delivered to the delivery port 7 downwards through the downstream upper surface portion 6 located in a lower position than the upstream upper surface portion 5. Therefore, the sheet S that is delivered to the delivery port 7 is stacked on a conveyed sheet 8 on the delivery port 7 from above. Thus, the conveyance apparatus 100 is capable of preventing the interference between the sheet S to be delivered and the conveyed sheet 8 with a simple configuration.

Here, the conveyance apparatus described in Japanese Patent Application Laid-open No. 2014-76897 requires a sheet pressing mechanism with a complicated configuration in order to suppress the warp of the sheet. On the other hand, if the sheet pressing mechanism has a simple configuration, the warp of the sheet is not sufficiently suppressed. If the warp of the sheet is not sufficiently suppressed in the conveyance apparatus described in Japanese Patent Application Laid-open No. 2014-76897, the interference between the sheet to be delivered and the conveyed sheet(s) on the delivery port occurs. In contrast, in accordance with the above-mentioned conveyance apparatus 100, the interference between the sheet to be delivered and the conveyed sheet(s) on the delivery port can be prevented with a simple configuration.

The conveyance apparatus 100 further includes a sheet placement tray 2, a main body part 10, a feed roller 20, a paper feed roller 21, and a plurality of conveyance rollers (not shown). The sheet S placed on the sheet placement tray 2 is fed to the sheet conveyance path 1 through the feed roller 20 and the paper feed roller 21. The sheet conveyance path 1 is formed inside the main body part 10. The sheet conveyance path 1 is constituted by an upper conveyance path 11, a reversing conveyance path 12, and a lower conveyance path 13 in the stated order from the upstream side. The plurality of conveyance rollers is arranged to sandwich the sheet S inside the sheet conveyance path 1. The plurality of conveyance rollers conveys the sheet S by rotation.

The upper conveyance path 11 is in communication with a surface of the sheet placement tray 2 on which the sheet S is placed. The reversing conveyance path 12 reverses the front and back of the sheet S being conveyed. The lower conveyance path 13 is in communication with the delivery port 7. The upper surface of the lower conveyance path 13 constitutes a part of the delivery upper surface portion 4.

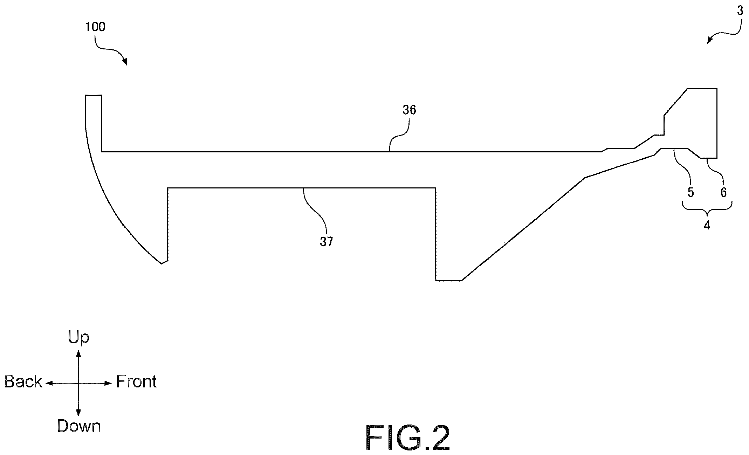

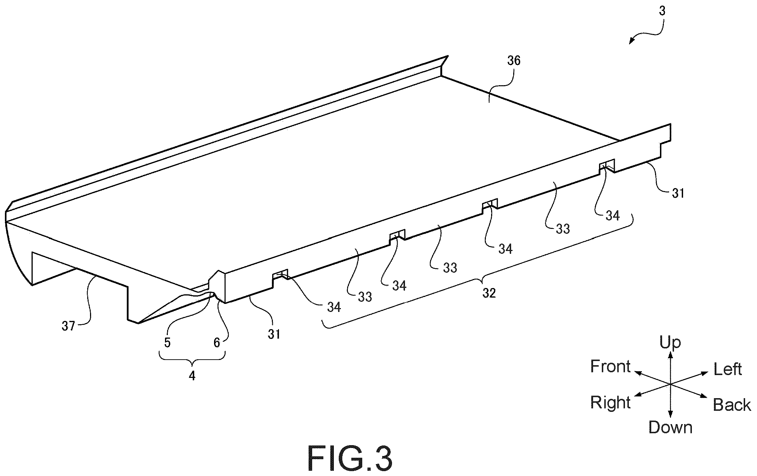

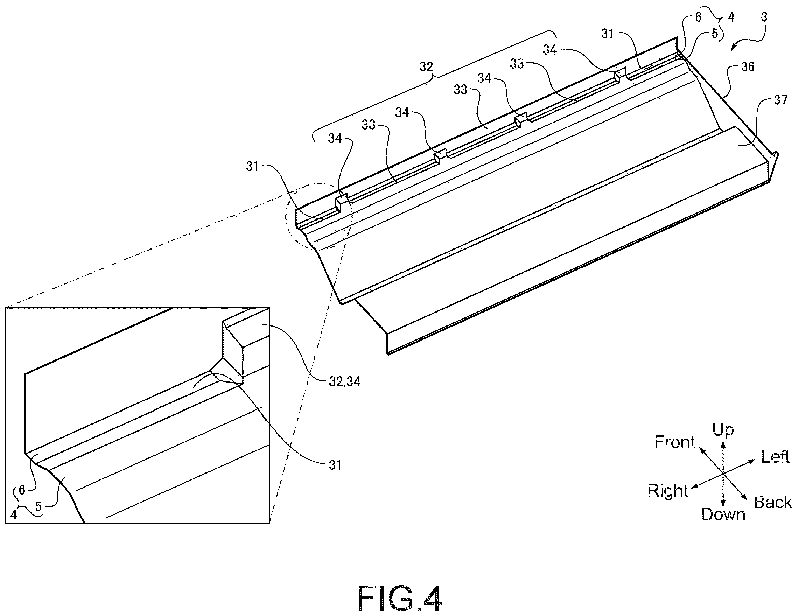

Hereinafter, details of the conveyance apparatus 100 will be described with reference to Figs. 2 to 4. Fig. 2 is a side view of a sheet guiding frame 3 that the conveyance apparatus 100 has. Fig. 3 is an upper perspective view of the sheet guiding frame 3. Fig. 4 is a lower perspective view of the sheet guiding frame 3.

As shown in Fig. 2, the conveyance apparatus 100 has the sheet guiding frame 3. A part of the lower surface of the sheet guiding frame 3 corresponds to the delivery upper surface portion 4. Therefore, the sheet guiding frame 3 includes the upstream upper surface portion 5 and the downstream upper surface portion 6 that is located in a lower position than the upstream upper surface portion 5.

As shown in Fig. 3, the sheet guiding frame 3 extends in the left and right directions. The left and right directions are orthogonal to the direction in which the sheet S is conveyed (front direction) and up and down directions. Hereinafter, the left and right directions will be also referred to as a first direction. Therefore, the downstream upper surface portion 6 extends in the first direction orthogonal to the direction in which the sheet S is conveyed and the up and down directions.

As shown in Figs. 3 and 4, the downstream upper surface portion 6 includes both end portions 31 in the first direction and a central portion 32 that is located between the both end portions 31. The central portion 32 is located in an upper position than the both end portions 31. The both end portions 31 are located in a lower position than the upstream upper surface portion 5.

Even if the conveyed sheet 8 has an upward warp at both end portions in the first direction that is the left and right directions, the both end portions 31 restrict the warp. Therefore, the conveyance apparatus 100 is capable of further preventing the interference between the sheet S to be delivered and the conveyed sheet 8 with a simple configuration.

As shown in Figs. 3 and 4, the sheet guiding frame 3 further includes a top mounting portion 36 and a bottom recess portion 37. For example, an apparatus (not shown) necessary for operation of the conveyance apparatus 100 is mounted on the top mounting portion 36. For example, an apparatus (not shown) necessary for scanning an image on the sheet S is disposed in the bottom recess portion 37.

The central portion 32 includes larger-width portions 33 and recessed portions 34. The larger-width portions 33 are wider in the left and right directions than the recessed portions 34. The recessed portions 34 are located in an upper position than the larger-width portions 33.

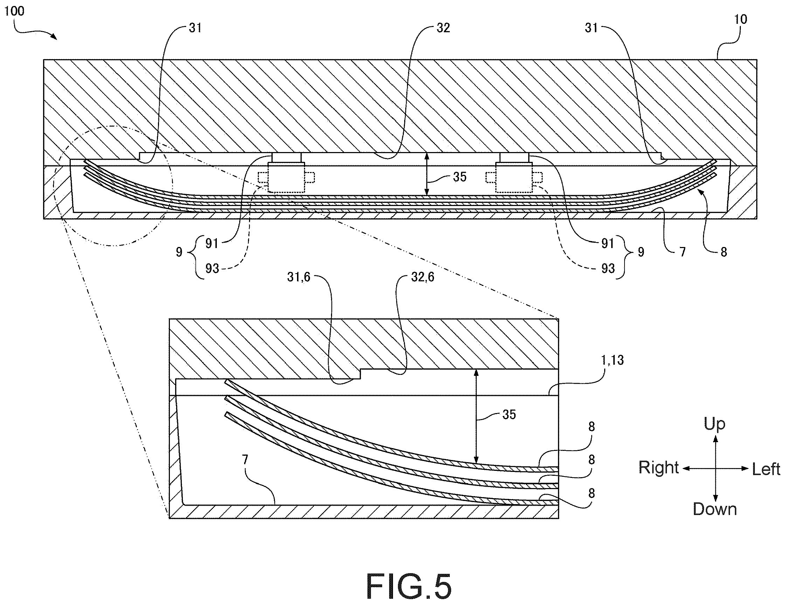

Hereinafter, the conveyance apparatus 100 in which the conveyed sheet 8 is stacked on the delivery port 7 will be described in detail with reference to Fig. 5. Fig. 5 is a lateral cross-sectional view of the conveyance apparatus 100. In Fig. 5, the larger-width portions 33 and the recessed portions 34 that constitute the central portion 32 are omitted in order to simplify the illustration.

As shown in Fig. 5, the conveyed sheet 8 conveyed from the sheet conveyance path 1 is stacked on the delivery port 7. The stacked conveyed sheet 8 warps more upward as the stacked conveyed sheet 8 is closer to both end portions in the first direction that is the left and right directions.

The both end portions 31 restrict the warp of the stacked conveyed sheet 8. A space 35 is formed between the central portion 32 and the stacked conveyed sheet 8. The central portion 32 guides the sheet S to the space 35.

Even if the conveyed sheet 8 comes into contact with the both end portions 31 due to warping, the sheet S is delivered from the space 35 between the central portion 32 and the conveyed sheet 8. Therefore, the conveyance apparatus 100 is capable of further preventing the interference between the sheet S to be delivered and the warping conveyed sheet 8 with a simple configuration. Thus, the conveyance apparatus 100 allows the delivery port 7 to have a size with which the conveyed sheet 8 easily warps. That is, the conveyance apparatus 100 allows downsizing of the delivery port 7.

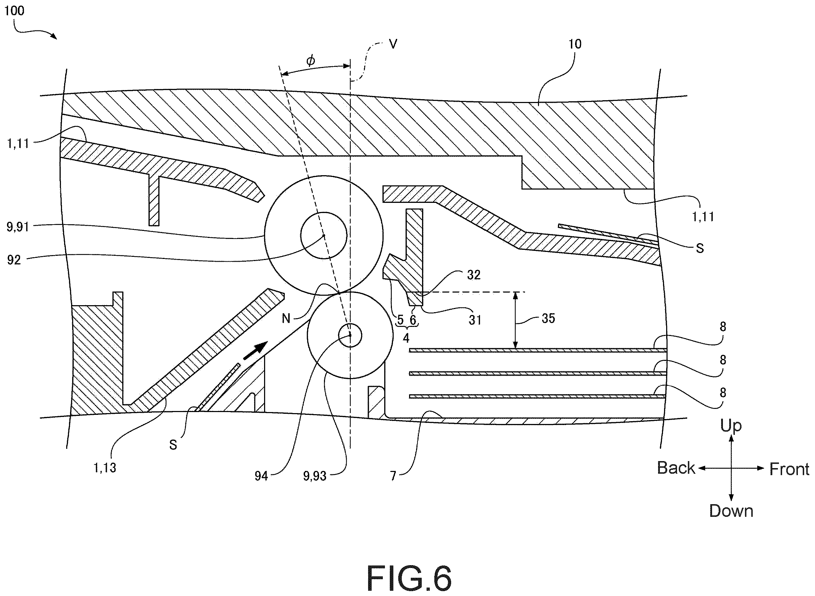

Hereinafter, details of the sheet conveyance path 1 in vicinity of the delivery port 7 will be described with reference to Fig. 6. Fig. 6 is an enlarged vertical cross-sectional view of the sheet conveyance path 1 in vicinity of the delivery port 7.

As shown in Fig. 6, the conveyance apparatus 100 further includes a pair of delivery rollers 9. The pair of delivery rollers 9 delivers the sheet S from the sheet conveyance path 1 to the delivery port 7 while sandwiching the sheet S from above and below. A position N where the pair of delivery rollers 9 sandwiches the sheet S is located in an upper position than the both end portions 31.

The sheet S is delivered after being sandwiched above the both end portions 31, so the sheet S is delivered to the delivery port 7 from an upper part of the space 35 between the central portion 32 and the conveyed sheet 8. Therefore, the conveyance apparatus 100 is capable of further preventing the interference between the sheet S to be delivered and the conveyed sheet 8 with a simple configuration.

The pair of delivery rollers 9 includes an upper roller 91 and a lower roller 93. A shaft center 92 of the upper roller 91 is located on an upstream side more than a shaft center 94 of the lower roller 93. That is, the shaft center 92 of the upper roller 91 is located at the back than a vertical surface V that extends through the shaft center 94 of the lower roller 93. In other words, the vertical surface V that extends through the shaft center 94 of the lower roller 93 and the surface that extends through the shaft center 92 of the upper roller 91 and the shaft center 94 of the lower roller 93 form a predetermined angle φ that is an acute angle.

The sheet S sandwiched by the pair of delivery rollers 9 is conveyed upward, so it is delivered to the delivery port 7 from the upper part of the space 35 between the central portion 32 and the conveyed sheet 8. Therefore, the conveyance apparatus 100 is capable of further preventing the interference between the sheet S to be delivered and the conveyed sheet 8 with a simple configuration.

The upper roller 91 that constitutes the pair of delivery rollers 9 may convey not only the sheet S on the lower conveyance path 13, but also the sheet S on the upper conveyance path 11. In a case where the upper roller 91 also conveys the sheet S on the upper conveyance path 11, the main body part 10 further includes an additional roller (not shown) that protrudes from above on the upper conveyance path 11. The upper roller 91 and the additional roller sandwich and convey the sheet S on the upper conveyance path 11.

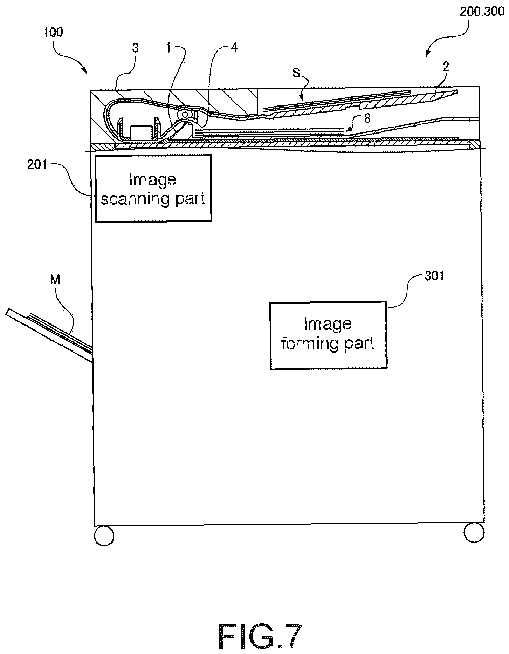

Hereinafter, an image scanning apparatus 200 and an image forming apparatus 300 with the conveyance apparatus 100 will be described with reference to Fig. 7. Fig. 7 is an upper cutout side view of the image scanning apparatus 200 and the image forming apparatus 300 with the conveyance apparatus 100.

As shown in Fig. 7, the image scanning apparatus 200 includes the conveyance apparatus 100 and an image scanning part 201. The image scanning part 201 scans an image on a sheet S being conveyed by the conveyance apparatus 100. The image scanning part 201 includes, for example, a contact glass, a slit glass, an irradiation part, a photoelectric conversion element, and a scanning unit.

The image scanning apparatus 200 is capable of preventing the interference between the sheet S to be delivered and the conveyed sheet 8 with a simple configuration while scanning the image from the sheet S through the conveyance apparatus 100 and the image scanning part 201.

The image forming apparatus 300 includes the image scanning apparatus 200 and an image forming part 301. The image forming part 301 forms an image on a recording medium M. The image forming part 301 includes, for example, a photosensitive drum, a charging apparatus, an exposure apparatus, a developing apparatus, a supply apparatus, a transferring roller, a cleaning apparatus, and an ionizing apparatus. Note that the image forming part 301 is not limited to the electrophotographic system. The image forming part 301 may employ an ink jet system.

The image forming apparatus 300 is capable of preventing the interference between the sheet S to be delivered and the conveyed sheet 8 with a simple configuration while forming the image on the recording medium M through the image scanning apparatus 200 and the image forming part 301.

Hereinabove, the embodiment of the present disclosure has been described with reference to the drawings. Note that the present disclosure is not limited to the above-mentioned embodiment, and may be carried out in various aspects without departing from the gist. For easy understanding, the drawings each schematically show configurations of elements mainly, and the thickness, the length, the number of items, the intervals, and the like of each component shown in the figure are different from the actual ones for the sake of convenience for creating the drawings. Moreover, the velocity, the material, the shape, the dimensions, and the like of each component shown in the above-mentioned embodiment, and there are no particular limitations and various modifications can be made without substantially departing from the configurations of the present disclosure.

It should be understood by those skilled in the art that various modifications, combinations, subcombinations and alterations may occur depending on design requirements and other factors insofar as they are within the scope of the appended claims or the equivalents thereof.

## Claims

1. A conveyance apparatus (100), comprising:
a sheet conveyance path (1) on which a sheet is conveyed;
a delivery port (7) to which the sheet conveyed on the sheet conveyance path (1) is delivered; and
a delivery upper surface portion (4) that is continuous with an upper surface of the sheet conveyance path (1) and constitutes an upper surface of the delivery port (7), wherein
the delivery upper surface portion (4) includes
an upstream upper surface portion (5) that is located on an upstream side in a direction in which the sheet is conveyed, and
a downstream upper surface portion (6) that is located on a downstream side in the direction in which the sheet is conveyed, and
the downstream upper surface portion (6) is located in a lower position than the upstream upper surface portion (5).

2. The conveyance apparatus (100) according to claim 1, wherein
the downstream upper surface portion (6) extends in a first direction orthogonal to the direction in which the sheet is conveyed and up and down directions,
the downstream upper surface portion (6) includes
both end portions (31) in the first direction, and
a central portion (32) that is located in an upper position than the both end portions (31) between the both end portions (31), and
the both end portions (31) are located in a lower position than the upstream upper surface portion (5).

3. The conveyance apparatus (100) according to claim 2, wherein
on the delivery port (7), a conveyed sheet (8) conveyed from the sheet conveyance path (1) is stacked,
the stacked conveyed sheet (8) warps more upward as the stacked conveyed sheet (8) is closer to both end portions (31) in the first direction,
the both end portions (31) restrict a warp of the stacked conveyed sheet (8),
the central portion (32) and the stacked conveyed sheet (8) have a space therebetween, and
the central portion (32) guides the sheet into the space.

4. The conveyance apparatus (100) according to claim 2 or 3, further comprising
a pair of delivery rollers (9) that sandwiches the sheet from above and below and delivers the sheet to the delivery port (7) from the sheet conveyance path (1), wherein
a position where the sheet is sandwiched by the pair of delivery rollers (9) is located in an upper position than the both end portions (31).

5. The conveyance apparatus (100) according to claim 4, wherein
the pair of delivery rollers (9) includes
an upper roller (91) that protrudes to the sheet conveyance path (1) from above, and
a lower roller (93) that protrudes to the sheet conveyance path (1) from below, and
the upper roller (91) has a shaft center that is located on the upstream side more than a shaft center of the lower roller (93).

6. An image scanning apparatus (200), comprising:
the conveyance apparatus (100) according to claim 1 or 2; and
an image scanning part (201) that scans an image on the sheet conveyed by the conveyance apparatus (100).

7. An image forming apparatus (300), comprising:
the image scanning apparatus (200) according to claim 6; and
an image forming part (301) that forms an image on a recording medium.
